# EUROPÄISCHE PATENTSCHRIFT

(11) **EP 4 037 105 B1**
(45) Veröffentlichungstag und Bekanntmachung des Hinweises auf die Patenterteilung: **04.03.2026**
(21) Anmeldenummer: 22153970.3
(22) Anmeldetag: 28.01.2022
(51) Int. Cl.: H01R 4/48, G02B 6/00, H01R 13/717

(54) **LEITERANSCHLUSSKLEMME, PRÜFANORDNUNG UND PRÜFVERFAHREN**
CONDUCTOR TERMINAL, TEST ARRANGEMENT AND TEST METHOD
BORNE DE CONDUCTEUR, AGENCEMENT D'ESSAI ET PROCÉDÉ D'ESSAI

(30) Priorität: 01.02.2021 DE 102021102232
(43) Veröffentlichungstag der Anmeldung: 03.08.2022
(73) Patentinhaber: WAGO Verwaltungsgesellschaft mbH, 32423 Minden (DE)
(72) Erfinder: WILKENING, Stefan, 31702 Lüdersfeld (DE)
(74) Vertreter: Kröncke, Rolf

(56) Entgegenhaltungen:
- EP-A1- 1 315 240
- CN-B- 110 299 621
- DE-A1- 102014 119 421
- DE-A1- 102019 119 725
- DE-A1- 102020 107 435
- DE-C1- 19 512 915
- DE-U1- 202016 101 052
- US-B1- 10 490 916

## Beschreibung

Die Erfindung betrifft eine Leiteranschlussklemme mit einem Gehäuse und wenigstens einem in dem Gehäuse angeordneten Federkraftklemmanschluss zum Anklemmen eines elektrischen Leiters mittels Federkraft, wobei wenigstens ein Teilbereich des Gehäuses aus optisch transparentem Material gebildet ist. Die Erfindung betrifft außerdem eine Prüfanordnung zum Prüfen der Funktionsfähigkeit einer solchen Leiteranschlussklemme und ein Verfahren zum Prüfen der Funktionsfähigkeit.

Leiteranschlussklemmen der eingangs genannten Art sind bekannt, z.B. durch die 221-Serie der Anmelderin. Solche Leiteranschlussklemmen werden teilweise mit transparenten Gehäusen angeboten, sodass das korrekte Einstecken eines elektrischen Leiters vom Anwender visuell geprüft werden kann. Aus der EP 1 315 240 A1 ist eine Kabelklemme mit optischer Anzeige bekannt. Aus der US 10,490,916 B1 ist ein Klemmenblock mit einer lichtemittierenden Struktur bekannt.

Der Erfindung liegt die Aufgabe zugrunde, eine Leiteranschlussklemme mit weiter verbesserten Prüfmöglichkeiten anzugeben, die insbesondere auch eine Prüfung der Funktionsfähigkeit der Leiteranschlussklemme ermöglichen.

Diese Aufgabe wird mit einer Leiteranschlussklemme gemäß Anspruch 1 gelöst. Dies beinhaltet, dass die Leiteranschlussklemme innerhalb des Gehäuses wenigstens ein Lichtleitelement hat, durch das von außen durch den optisch transparenten Teilbereich des Gehäuses in das Gehäuse eingestrahltes Licht zu einer vorbestimmten Position im Gehäuse leitbar und/oder in eine vorbestimmte Abstrahlrichtung in dem Gehäuse umlenkbar ist, die von der Einstrahlrichtung des Lichts verschieden ist. Die Erfindung hat den Vorteil, dass die Leiteranschlussklemme eine verbesserte und insbesondere auch eine vereinfachte automatische Prüfung durch eine optische Prüfanordnung ermöglicht. Dies wird durch das wenigstens eine im Gehäuse angeordnete Lichtleitelement gefördert, das es ermöglicht, von außen durch den optisch transparenten Teilbereich des Gehäuses Licht in das Gehäuse einzustrahlen und durch optische Prüfung an einer anderen Position im Gehäuse oder außerhalb des Gehäuses zu kontrollieren, ob zumindest ein Teil des eingestrahlten Lichts dort erkennbar ist. Das wenigstens eine Lichtleitelement kann ebenfalls aus optisch transparentem Material gebildet sein, z.B. aus dem gleichen Material wie der optisch transparente Teilbereich des Gehäuses oder einem anderen entsprechenden Material. Das Gehäuse kann auch insgesamt aus optisch transparentem Material ausgebildet sein.

Als optisch transparent wird im Rahmen dieser Anmeldung insbesondere ein Material oder ein Element verstanden, das durchlässig ist für Licht im vom Menschen wahrnehmbaren Wellenlängenbereich (380-750 nm). Das optisch transparente Material kann insbesondere farblos transparent ausgebildet sein (klar).

Die Leiteranschlussklemme kann insbesondere ohne eigene Lichtquelle ausgebildet sein. Das wenigstens eine Lichtleitelement dient daher nicht zum Leiten von Licht aus dem Gehäuse heraus, sondern zum Weiterleiten von in das Gehäuse eingestrahltem Licht. Die Leiteranschlussklemme kann insgesamt als passives Bauteil ausgebildet sein, z.B. als ein elektromechanisches Bauteil ohne Elektronik-Komponenten.

Gemäß einer vorteilhaften Ausgestaltung der Erfindung ist vorgesehen, dass das wenigstens eine Lichtleitelement als innerhalb des Gehäuses angeordnete Gehäusewand ausgebildet ist. Dies hat den Vorteil, dass z.B. eine ohnehin im Gehäuse angeordnete Gehäusewand als Lichtleitelement genutzt werden kann. Dementsprechend ist nicht unbedingt ein zusätzliches Bauteil für das Lichtleitelement erforderlich. Das Lichtleitelement kann insbesondere integral (einstückig) mit dem Gehäuse ausgeformt sein.

Gemäß einer vorteilhaften Ausgestaltung der Erfindung ist vorgesehen, dass sich das wenigstens eine Lichtleitelement orthogonal von einer Außenwand des Gehäuses aus in das Innere des Gehäuses erstreckt. Dies hat den Vorteil, dass durch die Außenwand mittels einer Lichtquelle auf einfache Weise, nämlich in orthogonaler Richtung zur Außenwand, das in das Gehäuse einzustrahlende Licht abgegeben werden kann. Auf diese Weise kann insbesondere eine einfache Prüfung der Funktionsfähigkeit der Leiteranschlussklemme mittels einer Prüfanordnung automatisiert erfolgen. Das wenigstens eine Lichtleitelement kann sich von der Außenwand des Gehäuses aus bis zu einer gegenüberliegenden Außenwand des Gehäuses erstrecken, oder bereits vor der gegenüberliegenden Außenwand enden und dementsprechend als stummelartige Gehäusewand ausgebildet sein.

Gemäß einer vorteilhaften Ausgestaltung der Erfindung ist vorgesehen, dass das wenigstens eine Lichtleitelement einen Leiteranschlag zur Begrenzung der Einstecktiefe eines am Federkraftklemmanschluss anzuklemmenden elektrischen Leiters bildet. Dies hat den Vorteil, dass das Lichtleitelement noch eine weitere Funktion, neben der Lichtleitung, übernehmen kann. Hierdurch kann die Leiteranschlussklemme kompakt gestaltet werden, da nicht unbedingt ein weiteres Bauteil für die Begrenzung der Einstecktiefe des elektrischen Leiters erforderlich ist.

Gemäß der Erfindung ist vorgesehen, dass die Leiteranschlussklemme wenigstens eine Leitereinführöffnung hat, durch die ein am Federkraftklemmanschluss anzuklemmender elektrischer Leiter in einer Leitereinführrichtung in das Gehäuse einführbar ist, wobei das wenigstens eine Lichtleitelement zur Umlenkung des durch den optisch transparenten Teilbereich des Gehäuses in das Gehäuse eingestrahlten Lichts zur Leitereinführöffnung hin eingerichtet ist. Dies hat den Vorteil, dass durch die Leitereinführöffnung somit eine optische Prüfung des in das Gehäuse eingestrahlten Lichts durchgeführt werden kann. Beispielsweise wird das Licht in einer orthogonalen Richtung zur Leitereinführrichtung in das Gehäuse eingestrahlt und kann dennoch durch die Leitereinführöffnung geprüft werden.

Gemäß einer vorteilhaften Ausgestaltung der Erfindung ist vorgesehen, dass das wenigstens eine Lichtleitelement zur Umlenkung des durch den optisch transparenten Teilbereich des Gehäuses in das Gehäuse eingestrahlten Lichts in einem Winkel von 60 bis 120 Grad, insbesondere 90 Grad, eingerichtet ist. Dies hat den Vorteil, dass die Prüfanordnung für eine automatische Prüfung der Leiteranschlussklemme mittels des eingestrahlten Lichts einfach gestaltet werden kann und eine schnelle automatisierte Prüfung möglich ist.

Gemäß einer vorteilhaften Ausgestaltung der Erfindung ist vorgesehen, dass das wenigstens eine Lichtleitelement als optisch transparentes Kunststoffteil ausgebildet ist, das wenigstens eine Lichtabstrahlfläche zur Abstrahlung des durch den optisch transparenten Teilbereich des Gehäuses in das Gehäuse eingestrahlten Lichts in das Gehäuse hat, wobei die wenigstens eine Lichtabstrahlfläche eine mattierte Oberfläche hat. Dies hat den Vorteil, dass die Umlenkung des eingestrahlten Lichts mit einfachen Mitteln erfolgen kann, die insbesondere fertigungstechnisch bei einer Leiteranschlussklemme leicht realisierbar sind. So kann das Lichtleitelement beispielsweise direkt im Kunststoff-Spritzgießprozess bei der Herstellung des Gehäuses integral mit erzeugt werden. Dadurch, dass die Lichtabstrahlfläche lediglich mattiert ist, ergeben sich auch keine Probleme bei der Entformung des Gehäuses mit dem Lichtleitelement. Die mattierte Oberfläche kann z.B. dadurch realisiert werden, dass eine entsprechende aufgeraute Oberfläche, z.B. mit erodierter Struktur, im Spritzgießwerkzeug an der gewünschten Stelle erzeugt wird, die dann im Spritzgießprozess abgeformt wird. Die mattierte Oberfläche kann z.B. eine Oberflächenrauigkeit von Ra 0,4 bis Ra 18 haben. Es können z.B. die Oberflächen-Klassen 12 bis 45, insbesondere 21 bis 24, gemäß VDI 3400 realisiert sein.

Alternativ oder zusätzlich zur mattierten Oberfläche kann die Lichtabstrahlfläche auch in anderer Weise strukturiert sein, z.B. mit Mikroprismen. Das Lichtleitelement kann z.B. als im Wesentlichen quaderförmiges Kunststoffbauteil mit zueinander parallelen Seitenwänden ausgebildet sein. Das Lichtleitelement kann auch als sich zum freien Ende hin verjüngendes Kunststoffbauteil ausgebildet sein, beispielsweise mit konischem Querschnitt.

Gemäß einer vorteilhaften Ausgestaltung der Erfindung ist vorgesehen, dass die wenigstens eine Lichtabstrahlfläche schräg oder rechtwinklig zur Leitereinführrichtung angeordnet ist. Auf diese Weise ist eine deutliche Lichtumlenkung um einen erheblichen Winkel möglich, was wiederum die automatische Prüfung der Leiteranschlussklemme vereinfacht. Ist die Lichtabstrahlfläche schräg zur Leitereinführrichtung angeordnet, so kann der Winkel zwischen der Leitereinführrichtung und der Lichtabstrahlfläche beispielsweise im Bereich von 70 bis 110 Grad liegen.

Gemäß einer vorteilhaften Ausgestaltung der Erfindung ist vorgesehen, dass die Leiteranschlussklemme als Verbindungsklemme ausgebildet ist, die wenigstens zwei galvanisch miteinander verbundene Federkraftklemmanschlüsse hat, an denen jeweils ein elektrischer Leiter mittels Federkraft anklemmbar ist, wobei jedem der Federkraftklemmanschlüsse eine Leitereinführöffnung im Gehäuse zugeordnet ist, wobei die Leitereinführöffnungen auf voneinander abgewandten Seiten des Gehäuses angeordnet sind. Eine solche Verbindungsklemme eignet sich besonders gut zum Verbinden elektrischer Leitungen, die aus entgegengesetzten Richtungen aufeinander zu laufen, oder zum Reparieren von unterbrochenen elektrischen Leitungen.

Gemäß einer vorteilhaften Ausgestaltung der Erfindung ist vorgesehen, dass das wenigstens eine Lichtleitelement zwischen den wenigstens zwei galvanisch miteinander verbundenen Federkraftklemmanschlüssen angeordnet ist. Das Lichtleitelement kann z.B. in Bezug auf die Längsrichtung der Leiteranschlussklemme mittig darin angeordnet sein.

Gemäß einer vorteilhaften Ausgestaltung der Erfindung ist vorgesehen, dass die wenigstens zwei galvanisch miteinander verbundenen Federkraftklemmanschlüsse durch eine durchgehende Stromschiene miteinander verbunden sind.

Gemäß einer vorteilhaften Ausgestaltung der Erfindung ist vorgesehen, dass beide galvanisch miteinander verbundenen Federkraftklemmanschlüsse jeweils eine Klemmfeder und ein mit der Klemmfeder verbundenes Stromschienenstück aufweisen, wobei die Klemmfeder wenigstens einen Klemmschenkel hat, dessen freies Ende zur Stromschiene ausgerichtet ist. Der Klemmschenkel kann am freien Ende eine Klemmkante haben. Zwischen dem freien Ende des Klemmschenkels und dem Stromschienenstück wird eine Klemmstelle zum Anklemmen des elektrischen Leiters gebildet.

Gemäß der Erfindung ist vorgesehen, dass der Klemmschenkel an dem ihm zugeordneten Stromschienenstück anlegbar ist, wobei der Klemmschenkel im Lichtstrahlenweg von dem wenigstens einen Lichtleitelement zur Leitereinführöffnung angeordnet ist, wenn er an dem ihm zugeordneten Stromschienenstück anliegt. Dies hat den Vorteil, dass durch den Klemmschenkel der durch die Leitereinführungsöffnung sichtbare Anteil des eingestrahlten Lichts unterbrechbar oder zumindest verringerbar ist, wenn die Klemmstelle geschlossen ist. Bei geöffneter Klemmstelle lässt der Klemmschenkel das Licht durch, sodass mittels einer optischen Prüfung auf einfache Weise die Funktion der Betätigung des Klemmschenkels und dessen Anliegen am Stromschienenstück geprüft werden kann.

Gemäß einer vorteilhaften Ausgestaltung der Erfindung ist vorgesehen, dass die Leiteranschlussklemme wenigstens ein Betätigungselement zur Betätigung des wenigstens einen Federkraftklemmanschlusses hat, wobei durch manuelle Betätigung des Betätigungselements eine am Federkraftklemmanschluss gebildete Klemmstelle zum Anklemmen des elektrischen Leiters geöffnet werden kann. Das Betätigungselement kann z.B. als verschwenkbarer Betätigungshebel ausgebildet sein. Insbesondere kann ein solcher Betätigungshebel im Querschnitt eine U-Form haben, wobei der Betätigungshebel jeweils links und rechts von einem manuellen Betätigungsabschnitt abragende Seitenwangen haben kann. Zwischen den Seitenwangen ist dann ein Zwischenraum gebildet, durch den der elektrische Leiter zur Klemmstelle geführt werden kann. Der Betätigungshebel übergreift somit durch seine Seitenwangen den angeklemmten elektrischen Leiter.

Die eingangs genannte Aufgabe wird außerdem gelöst durch eine Prüfanordnung gemäß Anspruch 13. Dies hat den Vorteil, dass die Funktionsfähigkeit der Leiteranschlussklemme mit einfachen Mitteln geprüft werden kann, insbesondere in einer automatisierten Prüfung. Die Prüfung kann mit sichtbarem Licht erfolgen.

Vorteilhafter Weise kann dabei das folgende Verfahren zum Prüfen der Funktionsfähigkeit der Leiteranschlussklemme durchgeführt werden:
a) Anordnen der Leiteranschlussklemme an einer Prüfanordnung der zuvor erläuterten Art,
b) Einstrahlen von Licht in das Gehäuse der Leiteranschlussklemme durch den optisch transparenten Teilbereich des Gehäuses mittels der Lichtquelle,
c) Aufnehmen wenigstens eines ersten Bilds mit der Kamera, wenn die Klemmstelle der Leiteranschlussklemme geöffnet ist,
d) Aufnehmen wenigstens eines zweiten Bilds mit der Kamera, wenn die Klemmstelle der Leiteranschlussklemme geschlossen ist,
e) Prüfen, ob in dem wenigstens einen ersten Bild das vom Lichtleitelement abgestrahlte Licht im Wesentlichen vollständig erkennbar ist,
f) Prüfen, ob in dem wenigstens einen zweiten Bild das vom Lichtleitelement abgestrahlte Licht im Wesentlichen nicht erkennbar ist,
g) Feststellen, dass die Leiteranschlussklemme funktionsfähig ist, wenn beide Prüfungen in den Merkmalen e) und f) positive Ergebnisse zeigen,
h) andernfalls feststellen, dass die Leiteranschlussklemme nicht funktionsfähig ist.

Im Sinne der vorliegenden Erfindung ist unter dem unbestimmten Begriff "ein" kein Zahlwort zu verstehen. Wenn also z.B. von einem Bauteil die Rede ist, so ist dies im Sinne von "mindestens einem Bauteil" zu interpretieren. Soweit Winkelangaben in Grad gemacht werden, beziehen sich diese auf ein Kreismaß von 360 Grad (360°).

Die Erfindung wird nachfolgend anhand von Ausführungsbeispielen unter Verwendung von Zeichnungen näher erläutert.

Es zeigen
- Figur 1: eine Leiteranschlussklemme in seitlicher Schnittdarstellung mit einer Prüfanordnung,
- Figuren 2 bis 5: verschiedene Ausführungsformen eines Lichtleitelementes,
- Figur 6: eine Leiteranschlussklemme in seitlicher Schnittdarstellung mit weiteren Details.

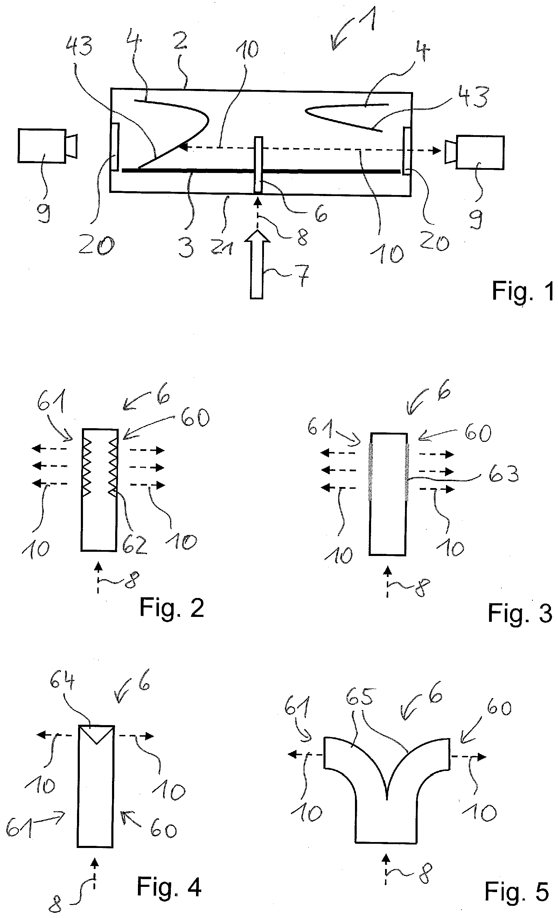

Die Figur 1 zeigt stark schematisiert eine Leiteranschlussklemme 1 in Form einer Verbindungsklemme. Die Leiteranschlussklemme 1 weist ein Gehäuse 2 auf, das an voneinander abgewandten Gehäuseseiten jeweils eine Leitereinführungsöffnung 20 zum Einführen eines elektrischen Leiters hat. In dem Gehäuse 2 befindet sich ein Kontakteinsatz, der eine Stromschiene 3 und Klemmfedern 4 aufweist. Eine links dargestellte Klemmfeder 4 ist der linken Leitereinführungsöffnung 20 zugeordnet und bildet mit einem Abschnitt der Stromschiene 3 eine Klemmstelle. Die rechte Klemmfeder 4 ist der rechten Leitereinführungsöffnung 20 zugeordnet und bildet mit einem weiteren Abschnitt der Stromschiene 3 eine Klemmstelle für einen elektrischen Leiter. Wird an beiden Klemmstellen jeweils ein elektrischer Leiter angeklemmt, so sind diese elektrischen Leiter durch die Stromschiene 3 miteinander galvanisch verbunden.

Die Klemmfedern 4 können durch ein Betätigungselement der Leiteranschlussklemme 1 ausgelenkt werden, derart, dass ein jeweiliger Klemmschenkel 43 der Klemmfeder 4 von der Stromschiene 3 fortbewegt wird, um die Klemmstelle zu öffnen. Wird die Klemmstelle geschlossen, liegt der Klemmschenkel 43 entweder an der Stromschiene 3 an, wenn kein elektrischer Leiter eingesteckt ist, oder an dem elektrischen Leiter an. In der Figur 1 ist der linke Federkraftklemmanschluss im geschlossenen Zustand dargestellt, der rechte Federkraftklemmanschluss im geöffneten Zustand.

In dem Gehäuse 2 befindet sich ein Lichtleitelement 6 an einer Position zwischen den Federkraftklemmanschlüssen bzw. den Klemmfedern 4. Das Lichtleitelement 6 ist als im Wesentlichen orthogonal zu einer unteren Außenwand 21 des Gehäuses 2 abragender Wandabschnitt ausgebildet.

Die Figur 1 zeigt zudem eine Prüfanordnung zum Prüfen der Funktionsfähigkeit der Leiteranschlussklemme. Die Prüfanordnung weist eine Lichtquelle 7 und jeweilige vor den Leitereinführungsöffnungen 20 platzierte Kameras 9 auf. Bei einem Prüfvorgang gibt die Lichtquelle 7 Licht 8 ab, das durch einen transparenten Teilbereich des Gehäuses 2 eingestrahlt wird und durch das Lichtleitelement 6 weitergeleitet und insbesondere in eine Lichtabstrahlrichtung umgeleitet wird, die im Wesentlichen orthogonal zur Einstrahlrichtung des Lichts 8 ist. Man erkennt in der Figur 1, dass von dem Lichtleitelement 6 das Licht sowohl zur rechten Leitereinführöffnung 20 als auch zur linken Leitereinführöffnung 20 als Lichtstrahlen 10 abgestrahlt wird. Das nach rechts abgestrahlte Licht 10 erreicht, weil die Klemmstelle geöffnet ist, die Kamera 9. Das nach links abgestrahlte Licht 10 wird durch den Klemmschenkel 43 aufgrund der geschlossenen Klemmstelle unterbrochen oder zumindest deutlich vermindert. Durch Auswertung der Bilder der Kameras 9 kann geprüft werden, ob eine Klemmstelle wie gewünscht geöffnet oder geschlossen ist. Aufgrund dessen kann auf die Funktionsfähigkeit der Betätigungsmechanik sowie die korrekte Anordnung der Klemmfedern geschlossen werden. Auf diese Weise kann eine automatische Prüfung der Funktionsfähigkeit der Leiteranschlussklemme 1 durchgeführt werden.

Die Figuren 2 bis 5 zeigen verschiedene vorteilhafte Ausführungsformen des Lichtleitelementes 6. Das Lichtleitelement 6 ist in allen Ausführungsformen so dargestellt, dass es das eingestrahlte Licht 8 in zwei Richtungen abstrahlt, d.h. von einer rechten Lichtabstrahlfläche 60 und einer linken Lichtabstrahlfläche 61. Das Lichtleitelement 6 muss aber nicht unbedingt in zwei Richtungen Licht abstrahlen. Das Lichtleitelement 6 kann auch derart ausgebildet sein, dass es nur in eine Richtung Licht abstrahlt, d.h. das z.B. nur die eine Lichtabstrahlfläche 60 oder die andere Lichtabstrahlfläche 61 vorhanden ist.

In der Ausführungsform der Figur 2 weist das Lichtleitelement 6 zur Umlenkung des eingestrahlten Lichts 8 in die Lichtabstrahlrichtung 10 im Volumen des Materials des Lichtleitelementes 6 oder an der Außenoberfläche der Lichtabstrahlflächen 60, 61 entsprechende Strukturierungen 62 auf, z.B. in Form von Mikroprismen.

Die Figur 3 zeigt eine Ausführungsform, bei der die Umlenkung des Lichts 8 in die Lichtabstrahlrichtung 10 durch mattierte Oberflächen 63 der Lichtabstrahlflächen 60, 61 realisiert ist.

Die Figur 4 zeigt eine Ausführungsform, bei der die Lichtumlenkung durch ein im Material des Lichtleitelementes 6 eingeformtes Prisma 64 erfolgt.

Die Figur 5 zeigt eine Ausführungsform des Lichtleitelementes 6, bei dem sich das Lichtleitelement 6 vom einem unteren Wurzelbereich nach oben hin aufteilt in jeweils einen nach links und einen nach rechts gebogenen Lichtleitarm 65. An den freien Enden der Lichtleitarme 65 ist die jeweilige Lichtabstrahlfläche 60, 61 ausgebildet.

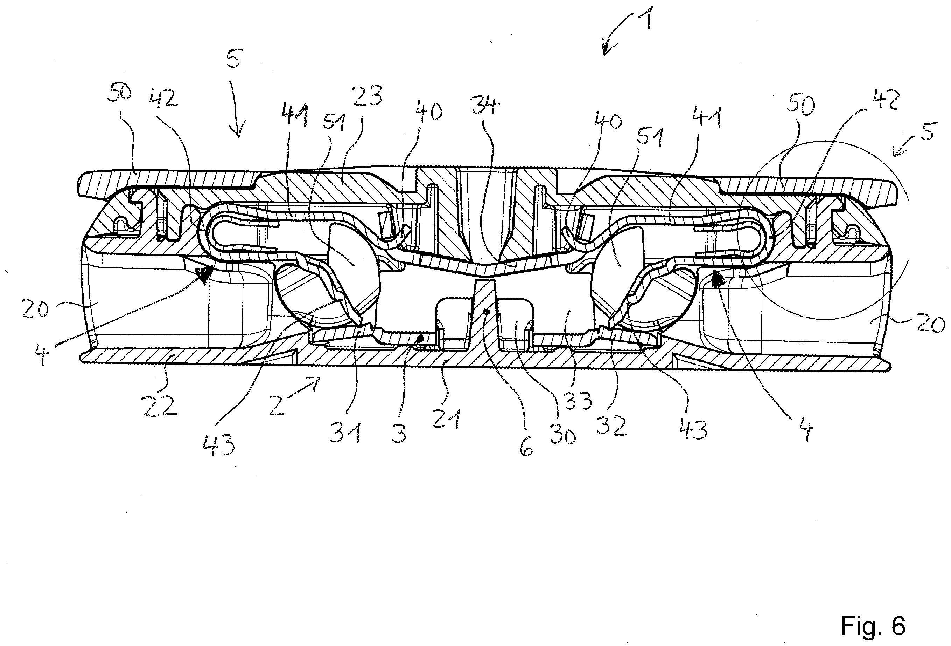

Die Figur 6 zeigt eine Leiteranschlussklemme 1 mit weiteren Details. Man erkennt, dass das Gehäuse 2 zumindest zweiteilig mit einem unteren Gehäuseteil 22 und einem oberen Gehäuseteil 23 ausgebildet ist. Das obere Gehäuseteil 23 ist mit dem unteren Gehäuseteil 22 verbunden, z.B. durch eine Verrastung. Am unteren Gehäuseteil 22 befindet sich die bereits erwähnte Außenwand 21, von der aus sich das Lichtleitelement 6 in Form einer inneren Gehäusewand des unteren Gehäuseteils 22 in das Innere des Gehäuses 2 erstreckt.

In dem Gehäuse 2 befindet sich ein Kontakteinsatz, der wiederum eine Stromschiene 3 und die zwei Klemmfedern 4 aufweist. Die Stromschiene 3 hat einen zur linken Klemmfeder 4 gewandten Stromschienenabschnitt 31 und einen zur rechten Klemmfeder 4 gewandten Stromschienenabschnitt 32. Die Stromschiene 3 erstreckt sich über einen gegenüber den Stromschienenabschnitten 31, 32 abgewinkelten rückwärtigen Abschnitt 33 nach oben hin zu einem oberen Abschnitt 34 der Stromschiene 3, der zur Fixierung der Klemmfedern 4 dient. In dem rückwärtigen Abschnitt 33 ist eine Aussparung 30 vorhanden, in die sich das Lichtleitelement 6 zumindest teilweise hineinerstreckt.

Die Klemmfedern 4 weisen jeweils einen Anlageschenkel 41, einen sich an den Anlageschenkel 41 anschließenden Federbogen 42 und einen sich an den Federbogen 42 anschließenden Klemmschenkel 43 auf. Zwischen dem Klemmschenkel 43 und dem jeweiligen Stromschienenabschnitt 31, 32 ist die Klemmstelle gebildet. Die Klemmfedern sind über ihre Anlageschenkel 41 mittels endseitigen gekrümmten Halteelementen 40 an dem oberen Bereich 34 der Stromschiene 3 befestigt, z.B. in entsprechenden Aussparungen dieses oberen Bereiches 34 eingehängt.

Zur Betätigung der Klemmfedern 4 weist jeder Federkraftklemmanschluss ein Betätigungselement 5 in Form eines verschwenkbaren Betätigungshebels auf. Das Betätigungselement 5 weist einen aus dem Gehäuse 2 herausragenden manuellen Griffbereich 50 auf. Vom manuellen Griffbereich 50 erstreckt sich jeweils seitlich neben der Klemmfeder 4 entlang eine Seitenwange 51 des Betätigungselements 5, die eine teilkreisförmige Kontur hat und hierdurch in der Art eines Nockens bei einem Verschwenken des Betätigungselementes 5 den Klemmschenkel 43 auslenken und dementsprechend vom zugeordneten Stromschienenstück 31, 32 fortbewegen kann.

Durch das jeweilige Betätigungselement 5 kann durch den Anwender willkürlich die Klemmstelle geöffnet oder geschlossen werden. Dies kann auch bei einem Prüfvorgang mittels der Prüfanordnung gemäß Figur 1 für die automatische Prüfung der Leiteranschlussklemme genutzt werden. Bei der automatischen Prüfung der Leiteranschlussklemme können die Betätigungselemente 5 beispielsweise durch einen Prüfmechanismus, z.B. ein mechanisches Stellglied, automatisch in die unterschiedlichen Stellungen verschwenkt werden.

## Patentansprüche

1. Leiteranschlussklemme (1) mit einem Gehäuse (2) und wenigstens einem in dem Gehäuse (2) angeordneten Federkraftklemmanschluss zum Anklemmen eines elektrischen Leiters mittels Federkraft, wobei wenigstens ein Teilbereich des Gehäuses (2) aus optisch transparentem Material gebildet ist, wobei die Leiteranschlussklemme (1) innerhalb des Gehäuses (2) wenigstens ein Lichtleitelement (6) hat, durch das von außen durch den optisch transparenten Teilbereich des Gehäuses (2) in das Gehäuse (2) eingestrahltes Licht (8) zu einer vorbestimmten Position im Gehäuse (2) leitbar und/oder in eine vorbestimmte Abstrahlrichtung in dem Gehäuse (2) umlenkbar ist, die von der Einstrahlrichtung des Lichts (8) verschieden ist, wobei die Leiteranschlussklemme (1) wenigstens eine Leitereinführöffnung (20) hat, durch die ein am Federkraftklemmanschluss anzuklemmender elektrischer Leiter in einer Leitereinführrichtung in das Gehäuse (2) einführbar ist, wobei das wenigstens eine Lichtleitelement (6) zur Umlenkung des durch den optisch transparenten Teilbereich des Gehäuses (2) in das Gehäuse (2) eingestrahlten Lichts (8) zur Leitereinführöffnung (20) hin eingerichtet ist, **dadurch gekennzeichnet, dass** der Federkraftklemmanschluss jeweils eine Klemmfeder (4) und ein mit der Klemmfeder (4) verbundenes Stromschienenstück (31, 32) aufweist, wobei die Klemmfeder (4) wenigstens einen Klemmschenkel (43) hat, dessen freies Ende zur Stromschiene (3) ausgerichtet ist, wobei der Klemmschenkel (43) an dem ihm zugeordneten Stromschienenstück (31, 32) anlegbar ist, wobei der Klemmschenkel (43) im Lichtstrahlenweg von dem wenigstens einen Lichtleitelement (6) zur Leitereinführöffnung (20) angeordnet ist, wenn er an dem ihm zugeordneten Stromschienenstück (31, 32) anliegt.

2. Leiteranschlussklemme nach Anspruch 1, **dadurch gekennzeichnet, dass** das wenigstens eine Lichtleitelement (6) als innerhalb des Gehäuses (2) angeordnete Gehäusewand ausgebildet ist.

3. Leiteranschlussklemme nach einem der vorhergehenden Ansprüche, **dadurch gekennzeichnet, dass** sich das wenigstens eine Lichtleitelement (6) orthogonal von einer Außenwand (21) des Gehäuses (2) aus in das Innere des Gehäuses (2) erstreckt.

4. Leiteranschlussklemme nach einem der vorhergehenden Ansprüche, **dadurch gekennzeichnet, dass** das wenigstens eine Lichtleitelement (6) einen Leiteranschlag zur Begrenzung der Einstecktiefe eines am Federkraftklemmanschluss anzuklemmenden elektrischen Leiters bildet.

5. Leiteranschlussklemme nach einem der vorhergehenden Ansprüche, **dadurch gekennzeichnet, dass** das wenigstens eine Lichtleitelement (6) zur Umlenkung des durch den optisch transparenten Teilbereich des Gehäuses (2) in das Gehäuse (2) eingestrahlten Lichts (8) in einem Winkel von 60 bis 120 Grad, insbesondere 90 Grad, eingerichtet ist.

6. Leiteranschlussklemme nach einem der vorhergehenden Ansprüche, **dadurch gekennzeichnet, dass** das wenigstens eine Lichtleitelement (6) als optisch transparentes Kunststoffteil ausgebildet ist, das wenigstens eine Lichtabstrahlfläche (60, 61) zur Abstrahlung des durch den optisch transparenten Teilbereich des Gehäuses (2) in das Gehäuse (2) eingestrahlten Lichts (8) in das Gehäuse (2) hat, wobei die wenigstens eine Lichtabstrahlfläche (60, 61) eine mattierte Oberfläche hat.

7. Leiteranschlussklemme nach Anspruch 6, **dadurch gekennzeichnet, dass** die wenigstens eine Lichtabstrahlfläche (60, 61) schräg oder rechtwinklig zur Leitereinführrichtung angeordnet ist.

8. Leiteranschlussklemme nach einem der vorhergehenden Ansprüche, **dadurch gekennzeichnet, dass** die Leiteranschlussklemme (1) als Verbindungsklemme ausgebildet ist, die wenigstens zwei galvanisch miteinander verbundene Federkraftklemmanschlüsse hat, an denen jeweils ein elektrischer Leiter mittels Federkraft anklemmbar ist, wobei jedem der Federkraftklemmanschlüsse eine Leitereinführöffnung (20) im Gehäuse (2) zugeordnet ist, wobei die Leitereinführöffnungen (20) auf voneinander abgewandten Seiten des Gehäuses (2) angeordnet sind.

9. Leiteranschlussklemme nach Anspruch 8, **dadurch gekennzeichnet, dass** das wenigstens eine Lichtleitelement (6) zwischen den wenigstens zwei galvanisch miteinander verbundenen Federkraftklemmanschlüssen angeordnet ist.

10. Leiteranschlussklemme nach einem der Ansprüche 8 bis 9, **dadurch gekennzeichnet, dass** die wenigstens zwei galvanisch miteinander verbundenen Federkraftklemmanschlüsse durch die durchgehende Stromschiene (3) miteinander verbunden sind.

11. Leiteranschlussklemme nach einem der Ansprüche 8 bis 10, **dadurch gekennzeichnet, dass** beide galvanisch miteinander verbundenen Federkraftklemmanschlüsse jeweils eine Klemmfeder (4) und ein mit der Klemmfeder (4) verbundenes Stromschienenstück (31, 32) aufweisen, wobei die Klemmfeder (4) wenigstens einen Klemmschenkel (43) hat, dessen freies Ende zur Stromschiene (3) ausgerichtet ist.

12. Leiteranschlussklemme nach einem der vorhergehenden Ansprüche, **dadurch gekennzeichnet, dass** die Leiteranschlussklemme (1) wenigstens ein Betätigungselement (5) zur Betätigung des wenigstens einen Federkraftklemmanschlusses hat, wobei durch manuelle Betätigung des Betätigungselements (5) eine am Federkraftklemmanschluss gebildete Klemmstelle zum Anklemmen des elektrischen Leiters geöffnet werden kann.

13. Prüfanordnung zum Prüfen der Funktionsfähigkeit einer Leiteranschlussklemme (1), mit einer Leiteranschlussklemme (1) nach einem der vorhergehenden Ansprüche, wobei die Prüfanordnung wenigstens eine auf den optisch transparenten Teilbereich des Gehäuses (2) gerichtete Lichtquelle (7) und eine auf einen anderen optisch transparenten Teilbereich des Gehäuses (2) oder auf die Leitereinführöffnung (20) gerichtete Kamera (9) hat.

14. Verfahren zum Prüfen der Funktionsfähigkeit einer Leiteranschlussklemme nach einem der Ansprüche 1 bis 12 mit folgenden Schritten:
a) Bereitstellen einer Prüfanordnung nach Anspruch 13,
b) Einstrahlen von Licht (8) in das Gehäuse (2) der Leiteranschlussklemme (1) durch den optisch transparenten Teilbereich des Gehäuses (2) mittels der Lichtquelle (7),
c) Aufnehmen wenigstens eines ersten Bilds mit der Kamera (9), wenn die Klemmstelle der Leiteranschlussklemme (1) geöffnet ist,
d) Aufnehmen wenigstens eines zweiten Bilds mit der Kamera (9), wenn die Klemmstelle der Leiteranschlussklemme (1) geschlossen ist, wobei der Klemmschenkel (43) an dem ihm zugeordneten Stromschienenstück (31, 32) anliegt im Lichtstrahlenweg von dem wenigstens einen Lichtleitelement (6) zur Leitereinführöffnung (20) angeordnet ist,
e) Prüfen, ob in dem wenigstens einen ersten Bild das vom Lichtleitelement (6) abgestrahlte Licht im Wesentlichen vollständig erkennbar ist,
f) Prüfen, ob in dem wenigstens einen zweiten Bild das vom Lichtleitelement (6) abgestrahlte Licht im Wesentlichen nicht erkennbar ist,
g) Feststellen, dass die Leiteranschlussklemme (1) funktionsfähig ist, wenn beide Prüfungen in den Merkmalen e) und f) positive Ergebnisse zeigen,
h) andernfalls feststellen, dass die Leiteranschlussklemme (1) nicht funktionsfähig ist.

## Claims

1. Conductor connection terminal (1) with a housing (2) and at least one spring-loaded terminal connection arranged in the housing (2) for clamping an electrical conductor by means of spring force, wherein at least one section of the housing (2) is made of optically transparent material, wherein the conductor connection terminal (1) has at least one light-guiding element (6) inside the housing (2), through which light (8) irradiated into the housing (2) from outside through the optically transparent part of the housing (2) can be guided to a predetermined position in the housing (2) and/or deflected in a predetermined direction of radiation in the housing (2) which is different from the direction of incidence of the light (8), wherein the conductor connection terminal (1) has at least one conductor insertion opening (20) through which an electrical conductor to be connected to the spring-loaded terminal can be inserted into the housing (2) in a conductor insertion direction, wherein the at least one light-guiding element (6) is arranged to deflect the light (8) radiated into the housing (2) through the optically transparent portion of the housing (2) toward the conductor insertion opening (20), **characterized in that** the spring-loaded terminal connection has a clamping spring (4) and a busbar piece (31, 32) connected to the clamping spring (4), wherein the clamping spring (4) has at least one clamping leg (43) whose free end is aligned with the busbar (3), wherein the clamping leg (43) can be applied to the busbar piece (31, 32) associated with it, wherein the clamping leg (43) is arranged in the light beam path from the at least one light-guiding element (6) to the conductor insertion opening (20) when it is in contact with the busbar section (31, 32) associated with it.

2. Conductor connection terminal according to claim 1, **characterized in that** the at least one light-guiding element (6) is designed as a housing wall arranged inside the housing (2).

3. Conductor connection terminal according to one of the preceding claims, **characterized in that** the at least one light-guiding element (6) extends orthogonally from an outer wall (21) of the housing (2) into the interior of the housing (2).

4. Conductor connection terminal according to one of the preceding claims, **characterized in that** the at least one light-guiding element (6) forms a conductor stop for limiting the insertion depth of an electrical conductor to be connected to the spring-loaded terminal connection.

5. Conductor connection terminal according to one of the preceding claims, **characterized in that** the at least one light-guiding element (6) is designed to deflect the light (8) emitted into the housing (2) through the optically transparent part of the housing (2) at an angle of 60 to 120 degrees, in particular 90 degrees.

6. Conductor connection terminal according to one of the preceding claims, **characterized in that** the at least one light-guiding element (6) is designed as an optically transparent plastic part, which has at least one light-emitting surface (60, 61) for emitting the light (8) irradiated into the housing (2) through the optically transparent sub-area of the housing (2) into the housing (2), wherein the at least one light-emitting surface (60, 61) has a matt surface.

7. Conductor connection terminal according to claim 6, **characterized in that** the at least one light-emitting surface (60, 61) is arranged at an angle or at right angles to the conductor insertion direction.

8. Conductor connection terminal according to one of the preceding claims, **characterized in that** the conductor connection terminal (1) is designed as a connecting terminal having at least two spring-loaded terminal connections connected to each other galvanically, to each of which an electrical conductor can be clamped by means of spring force, wherein each of the spring-loaded terminal connections is assigned a conductor insertion opening (20) in the housing (2), wherein the conductor insertion openings (20) are arranged on opposite sides of the housing (2).

9. Conductor connection terminal according to claim 8, **characterized in that** the at least one light-guiding element (6) is arranged between the at least two galvanically connected spring-loaded terminal connections.

10. Conductor connection terminal according to one of claims 8 to 9, **characterized in that** the at least two spring-loaded terminal connections connected to each other galvanically are connected to each other by the continuous busbar (3).

11. Conductor connection terminal according to one of claims 8 to 10, **characterized in that** both galvanically connected spring-loaded terminal connections each have a clamping spring (4) and a busbar piece (31, 32) connected to the clamping spring (4), wherein the clamping spring (4) has at least one clamping leg (43) whose free end is aligned with the busbar (3).

12. Conductor connection terminal according to one of the preceding claims, **characterized in that** the conductor connection terminal (1) has at least one actuating element (5) for actuating the at least one spring-loaded terminal connection, wherein manual actuation of the actuating element (5) can open a clamping point formed at the spring-loaded terminal connection for clamping the electrical conductor.

13. Test arrangement for testing the functionality of a conductor connection terminal (1), with a conductor connection terminal (1) according to one of the preceding claims, wherein the test arrangement has at least one light source (7) directed at the optically transparent part of the housing (2) and a camera (9) directed at another optically transparent part of the housing (2) or at the conductor insertion opening (20).

14. Method for testing the functionality of a conductor connection terminal according to one of claims 1 to 12, comprising the following steps:
a) Providing a test arrangement according to claim 13,
b) Irradiating light (8) into the housing (2) of the conductor connection terminal (1) through the optically transparent section of the housing (2) by means of the light source (7),
c) Taking at least one first image with the camera (9) when the clamping point of the conductor connection terminal (1) is open,
d) Taking at least one second image with the camera (9) when the clamping point of the conductor connection terminal (1) is closed, wherein the clamping leg (43) is arranged against the associated busbar section (31, 32) in the light beam path from the at least one light-guiding element (6) to the conductor insertion opening (20).
e) Checking whether the light emitted by the light-guiding element (6) is essentially completely recognizable in the at least one first image,
f) Checking whether the light emitted by the light-guiding element (6) is essentially not recognizable in the at least one second image,
g) Determining that the conductor connection terminal (1) is functional if both checks in features e) and f) show positive results,
h) otherwise determine that the conductor connection terminal (1) is not functional.

## Revendications

1. Borne de connexion de conducteur (1) comprenant un boîtier (2) et au moins une connexion à serrage par ressort disposée dans le boîtier (2) et destinée à serrer un conducteur électrique au moyen d'une force de ressort, au moins une zone partielle du boîtier (2) étant formée d'un matériau optiquement transparent, la borne de connexion de conducteur (1) comportant, à l'intérieur du boîtier (2), au moins un élément de guidage de lumière (6) à travers lequel la lumière (8) injectée dans le boîtier (2) depuis l'extérieur à travers la zone partielle optiquement transparente du boîtier (2) peut être guidée vers une position prédéterminée dans le boîtier (2) et/ou être déviée dans une direction de rayonnement prédéterminée dans le boîtier (2), qui est différente de la direction d'injection de la lumière (8), dans laquelle
la borne de connexion de conducteur (1) présente au moins une ouverture d'insertion de conducteur (20) à travers laquelle un conducteur électrique à serrer au niveau de la connexion à serrage par ressort peut être inséré dans le boîtier (2) dans une direction d'insertion de conducteur,
ledit au moins un élément de guidage de lumière (6) est conçu pour dévier la lumière (8), injectée dans le boîtier (2) à travers la zone partielle optiquement transparente du boîtier (2), vers l'ouverture d'insertion de conducteur (20),
**caractérisée en ce que** la connexion à serrage par ressort comprend un ressort de serrage (4) et un élément de barre conductrice (31, 32) relié au ressort de serrage (4), le ressort de serrage (4) comportant au moins une branche de serrage (43) dont l'extrémité libre est orientée vers la barre conductrice (3), la branche de serrage (43) pouvant être appliquée contre l'élément de barre conductrice (31, 32) qui lui est associé, la branche de serrage (43) étant disposée dans le chemin optique allant dudit au moins un élément de guidage de lumière (6) vers l'ouverture d'insertion de conducteur (20) lorsqu'elle est appliquée contre l'élément de barre conductrice (31, 32) qui lui est associé.

2. Borne de connexion de conducteur selon la revendication 1, **caractérisée en ce que** ledit au moins un élément de guidage de lumière (6) est conçu comme une paroi de boîtier disposée à l'intérieur du boîtier (2).

3. Borne de connexion de conducteur selon l'une des revendications précédentes,
**caractérisée en ce que** ledit au moins un élément de guidage de lumière (6) s'étend orthogonalement à partir d'une paroi extérieure (21) du boîtier (2) vers l'intérieur du boîtier (2).

4. Borne de connexion de conducteur selon l'une des revendications précédentes,
**caractérisée en ce que** ledit au moins un élément de guidage de lumière (6) forme une butée de conducteur pour limiter la profondeur d'insertion d'un conducteur électrique à serrer au niveau de la connexion à serrage par ressort.

5. Borne de connexion de conducteur selon l'une des revendications précédentes,
**caractérisée en ce que** ledit au moins un élément de guidage de lumière (6) est conçu pour dévier la lumière (8), injectée dans le boîtier (2) à travers la zone partielle optiquement transparente du boîtier (2), selon un angle de 60 à 120 degrés, en particulier de 90 degrés.

6. Borne de connexion de conducteur selon l'une des revendications précédentes,
**caractérisée en ce que** ledit au moins un élément de guidage de lumière (6) est conçu comme une pièce en matière plastique optiquement transparente qui présente au moins une surface de rayonnement de lumière (60, 61) pour émettre dans le boîtier (2) la lumière (8) injectée dans le boîtier (2) à travers la zone partielle optiquement transparente du boîtier (2), ladite au moins une surface de rayonnement de lumière (60, 61) ayant une surface mate.

7. Borne de connexion de conducteur selon la revendication 6,
**caractérisée en ce que** ladite au moins une surface de rayonnement de lumière (60, 61) est disposée en oblique ou à angle droit par rapport à la direction d'insertion de conducteur.

8. Borne de connexion de conducteur selon l'une des revendications précédentes,
**caractérisée en ce que** la borne de connexion de conducteur (1) est conçue comme une borne de liaison qui comporte au moins deux connexions à serrage par ressort reliées entre elles par voie galvanique, au niveau desquelles un conducteur électrique respectif peut être serré au moyen d'une force de ressort, chacune des connexions à serrage par ressort étant associée à une ouverture d'insertion de conducteur (20) dans le boîtier (2), les ouvertures d'insertion de conducteur (20) étant disposées sur les côtés du boîtier (2) détournés l'un de l'autre.

9. Borne de connexion de conducteur selon la revendication 8,
**caractérisée en ce que** ledit au moins un élément de guidage de lumière (6) est disposé entre lesdites au moins deux connexions à serrage par ressort reliées entre elles par voie galvanique.

10. Borne de connexion de conducteur selon l'une des revendications 8 à 9,
**caractérisée en ce que** lesdites au moins deux connexions à serrage par ressort reliées entre elles par voie galvanique sont reliées entre elles par la barre conductrice continue (3).

11. Borne de connexion de conducteur selon l'une des revendications 8 à 10,
**caractérisée en ce que** les deux connexions à serrage par ressort reliées entre elles par voie galvanique comportent chacune un ressort de serrage (4) et un élément de barre conductrice (31, 32) relié au ressort de serrage (4), le ressort de serrage (4) comportant au moins une branche de serrage (43) dont l'extrémité libre est orientée vers la barre conductrice (3).

12. Borne de connexion de conducteur selon l'une des revendications précédentes,
**caractérisée en ce que** la borne de connexion de conducteur (1) comporte au moins un élément d'actionnement (5) pour actionner ladite au moins une connexion à serrage par ressort, l'actionnement manuel de l'élément d'actionnement (5) permettant d'ouvrir un point de serrage formé au niveau de la connexion à serrage par ressort et destiné à serrer le conducteur électrique.

13. Dispositif de contrôle pour contrôler le bon fonctionnement d'une borne de connexion de conducteur (1), comprenant une borne de connexion de conducteur (1) selon l'une des revendications précédentes,
dans lequel
le dispositif de contrôle comporte au moins une source lumineuse (7), dirigée vers la zone partielle optiquement transparente du boîtier (2), et une caméra (9) dirigée vers une autre zone partielle optiquement transparente du boîtier (2) ou vers l'ouverture d'insertion de conducteur (20).

14. Procédé pour contrôler le bon fonctionnement d'une borne de connexion de conducteur selon l'une des revendications 1 à 12, comprenant les étapes suivantes consistant à :
a) fournir un dispositif de contrôle selon la revendication 13,
b) injecter de la lumière (8) dans le boîtier (2) de la borne de connexion de conducteur (1) à travers la zone partielle optiquement transparente du boîtier (2) à l'aide de la source lumineuse (7),
c) prendre au moins une première image au moyen de la caméra (9), le point de serrage de la borne de connexion de conducteur (1) étant ouvert,
d) prendre au moins une deuxième image au moyen de la caméra (9), le point de serrage de la borne de connexion de conducteur (1) étant fermé, la branche de serrage (43) étant appliquée contre l'élément de barre conductrice (31, 32) qui lui est associé et étant disposée dans le chemin optique allant dudit au moins un élément de guidage de lumière (6) vers l'ouverture d'insertion de conducteur (20),
e) vérifier si, dans ladite au moins une première image, la lumière émise par l'élément de guidage de lumière (6) est sensiblement entièrement reconnaissable,
f) vérifier si, dans ladite au moins une deuxième image, la lumière émise par l'élément conducteur de lumière (6) n'est sensiblement pas reconnaissable,
g) déterminer que la borne de connexion de conducteur (1) est fonctionnelle si les deux vérifications dans les étapes e) et f) donnent des résultats positifs,
h) sinon, déterminer que la borne de connexion de conducteur (1) n'est pas fonctionnelle.
